# EUROPEAN PATENT SPECIFICATION

(11) **EP 3 932 803 B1**
(45) Date of publication and mention of the grant of the patent: **18.05.2022**
(21) Application number: 20400011.1
(22) Date of filing: 30.06.2020
(51) Int. Cl.: B64C 27/04, B64D 1/22

(54) **LOAD CARRYING ASSEMBLY FOR A ROTARY WING AIRCRAFT**
LASTAUFNAHMEZUSAMMENBAU FÜR EIN DREHFLÜGELFLUGZEUG
ENSEMBLE PORTEUR DE CHARGE POUR UN AÉRONEF À VOILURE TOURNANTE

(43) Date of publication of application: 05.01.2022
(73) Proprietor: Airbus Helicopters Deutschland GmbH, 86607 Donauwörth (DE)
(72) Inventor: FISCHER, Jürgen, 86157 Augsburg (DE)
(74) Representative: GPI Brevets

(56) References cited:
- EP-A1- 3 228 577
- GB-A- 1 233 364
- US-A- 4 005 852
- US-A- 4 750 691
- US-B1- 6 334 590

## Description

The present embodiments relate to a load carrying assembly and, more particularly, to a load carrying assembly for carrying a load with a rotary wing aircraft.

Aircrafts and, more particularly, rotary wing aircrafts such as e.g. helicopters are commonly used to perform aerial transportation and delivery tasks, including passenger transport, disaster relief, or carrying all kind of external loads. By way of example, rotary wing aircrafts are used to transport and deliver loads to mountainous regions in general and, more specifically, to mountainous regions where no roads exist or where roads cannot be used for transportation and delivery, e. g. due to extreme weather conditions in winter and so on.

Furthermore, rotary wing aircrafts are used for transportation and delivery of loads in the construction sector, where the loads may represent any kind of material. Moreover, rotary wing aircrafts can be used in firefighting for transportation of firefighting buckets. In addition, rotary wing aircrafts are also very useful in wood logging for transporting harvested wood. In all of these cases, the rotary wing aircrafts can be required to transport comparatively heavy external loads which can weigh up to several tons.

In order to enable a rotary wing aircraft for transportation of an external load, the rotary wing aircraft can be equipped with a load carrying assembly such as a cargo hook arrangement to which an external load mass rope for connection to the external load can be attached. Thus, a given external load can be suspended from the rotary wing aircraft by means of the external load mass rope, which is particularly useful for bulky loads which do not fit into the cabin of the rotary wing aircraft. Such cargo hook arrangements usually have a rigid support structure and a hook system that features one or more release sub-systems.

Load carrying assemblies for smaller loads that fit into the cabin of a rotary wing aircraft include hoist or lift mechanisms with an articulated support structure. Classically, such a hoist or lift mechanism has a boom that is secured to the fuselage of the aircraft with an external system. The hoist may include a winch mechanism that is fixed to the boom and a rope/cable attached to the winch mechanism so as to be unwound from or wound into the winch mechanism to respectively descend or ascend. Generally, a load carrying harness is secured to the rope/cable. Thus, people and/or objects can be moved by the mechanism while being attached to the load carrying harness.

In many rotary wing aircrafts, the hoist mechanism is located above an access opening provided in the fuselage. This access opening allows people or objects to enter and exit the fuselage. Depending on the requirements of the mission and on the architecture of these rotary wing aircrafts, the opening access may be a side door, a rear door or a movable panel, a floor trap or the like.

In a conventional rescue hoist mechanism, it is quite challenging to control the position of the rescue hoist. Moving the rotary wing aircraft's airframe to control the position of the rescue hoist may be a major obstacle in rescue activities that are often required to be fast and accurate.

For instance, in case of a rescue mission near a steep mountain wall, an operator onboard the aircraft needs to throw a complex rope system to a target position on the mountain wall. There, someone has to catch the rope and pull over the rescue hoist that is attached to the rope. This is especially difficult in windy situations.

Often, lifting a load may cause the load to oscillate or rotate, especially if the load is light, has high drag, and an insufficient sling load length. The rotation or oscillating movement of the load may be transmitted to the aircraft and lead to unstable flight characteristics which must be prevented by all means including countermeasures initiated by the aircraft's pilot or an emergency load drop.

Furthermore, flying with a deployed rope without cargo may cause the rope to interfere with and damage a rotor of the rotary wing aircraft, thereby endangering the aircraft and everyone inside.

Moreover, in case the support structure of the rescue hoist is rigid, the distance between the rope or cable and the aircraft needs to be small enough to provide for safe egress from or ingress to the aircraft.

In case the support structure of the rescue hoist is articulated, the distance between the rope or cable and the aircraft can be varied. However, an articulated rescue hoist usually requires a dedicated hoist operator as the rope or cable is subject to excitation from wind, rotor downwash, and/or aircraft maneuvers, which may cause the rope or cable to hit other parts of the aircraft, thereby damaging the aircraft or getting damaged by the aircraft.

Since the rope or cable needs to be controlled by a hoist operator, the distance between the aircraft and the deployed rope or cable needs to be small enough such that the hoist operator can hold the cable while sitting in the aircraft, standing on a boarding step, or standing on a skid, depending on the particular aircraft configuration.

Document US 8,052,090 B1 describes a support system that attaches a hoist to the External Stores Support System of an aircraft by using a boom from which a first leg depends and is attached to a forward fitting. A second leg is attached to the boom via a collar and attaches to an aft fitting while a torque arm is pivotally attached to the collar via a support arm, the torque arm also attaches to a tie-down fitting. The legs are attached to their respective fittings using pins and the torque arm is bolted to the tie-down ring fitting. A hoist slip having a horn is attached to an end of the boom.

Document RU 91 054 U1 describes a lifting device for a helicopter, comprising an electric winch, including a drum with a cable and a cable layer, a hook, a device for installing an electric winch outside the fuselage above the door opening of the passenger cabin, characterized in that the electric winch is fixedly mounted on the frame-truss device and fixed so that the axis of the drum electric winches are parallel to the axis of the fuselage of the helicopter, and the cable layer directs the cable vertically downward.

Document RU 2 245 819 C1 describes an on-board loading unit for a helicopter that includes a swivel strut with an articulated joint that is mounted between the floor and the ceiling inside the fuselage of the helicopter in the area of a door aperture. A boom is rigidly secured to the strut and a winch is mounted on the strut with a rope running to a roller that is fitted on a boom end and provided with a load hook. A fixed beam of the boom is secured on the strut on side brackets forming a tail cantilever. Fixed and movable beams of the boom are made in form of a telescopic system consisting of rectangular beams with bearing rollers for movable beam. The boom is provided with a hydraulic drive whose cylinder is secured on fixed beam and rod is connected with movable beam. Winch is secured on swivel platform mounted on lower part of strut for locking it in two positions. End of tail cantilever is provided with additional roller and two additional rollers with reeving systems are mounted in upper part of strut for motion of cargo inside fuselage by means of winch.

Document US 4 750 691 A describes a hoist for an aircraft such as a helicopter or a VTOL capable of hovering flight. The aircraft comprises a boom pivotally connected to the structural frame of the aircraft for movement between retracted and extended positions. A cable powered by a winch is engaged with the boom and is used for conventional hoisting operations.

However, these solutions all have in common that the rope or cable is deployed from an upper part of a helicopter involving the risk that the rope or cable hits other parts of the helicopter, thereby damaging the helicopter or getting damaged by the helicopter unless the rope or cable is controlled by a dedicated hoist operator.

Based on the limitations and drawbacks of the prior art, an objective is to provide a load carrying assembly for carrying a load with a rotary wing aircraft. The load carrying assembly should be operable by the pilot and eliminate the requirement for a dedicated hoist operator, thereby also increasing the useful payload of the rotary wing aircraft. The load carrying assembly should also provide for an increased operational safety by eliminating a potential contact between cable or rope and rotary wing aircraft. Furthermore, the load carrying assembly should automatically retract in case of a cut rope or cable.

This objective is solved by an apparatus comprising the features of claim 1. More specifically, a load carrying assembly for carrying a load with a rotary wing aircraft, comprises a load engaging system that is adapted for receiving a load; a drive that is adapted to be removably attached to a first attachment point of an associated rotary wing aircraft; a hoist that is adapted to be removably attached to a second attachment point of the associated rotary wing aircraft, wherein the second attachment point is different than the first attachment point; an articulated cargo boom with a first boom end and a second boom end that is opposite the first boom end, wherein the articulated cargo boom is movable between a stowed position and a deployed position; a swivel that attaches the first boom end of the articulated cargo boom rotatively to the drive; a sheave arrangement that is attached to the second boom end of the articulated cargo boom; and a cargo cable that passes through the sheave arrangement. The cargo cable comprises a first cable end that is attachable to the hoist, and a second cable end that is attachable to the load engaging system, wherein an unwinding of the cargo cable from the hoist initiates a deploying rotation of the articulated cargo boom around the swivel from the stowed position to the deployed position, and wherein a rewinding of the cargo cable initiates a stowing rotation of the articulated cargo boom around the swivel from the deployed position to the stowed position.

Illustratively, the load carrying assembly may provide an articulated support structure such as a boom. The rope or cable and the external load may be guided to prevent that the rope or cable and/or the external load interfere with the rotary wing aircraft. Thus, no dedicated hoist operator is required to guide the rope or cable. Even with significant rope or cable pendulum (e.g., up to 90° to either side), any interference between the rope or cable and/or the external load with the rotary wing aircraft should be prevented, contrary to prior art installations, in which the typical pendulum angle is limited to a maximum of 30° to either side.

The distance between the rope or cable and the center of the rotary wing aircraft is increased compared to prior art solutions. Thus, the rotary wing aircraft may hover beside an operational site instead of directly above it. Thereby, the safety of the crew onboard the rotary wing aircraft is increased in case of a one-engine-inoperative (OEI) incident and short rope or cable lengths due to a height loss of the rotary wing aircraft.

Furthermore, the distance between a rotor of a rotary wing aircraft and ground obstacles such as mountains or wind-turbines may be increased, thereby also increasing operational safety by reducing the risk of striking the obstacle with the rotor-blades.

Moreover, no dedicated control is required, as the articulated support structure moves as required to the most possible inboard position as soon as the sheave arrangement approaches the boom. As a result, there is no need for a dedicated hoist operator onboard the rotary wing aircraft. Thereby, the useful payload of the rotary wing aircraft may be increased, which in turn reduces the direct operating costs and improves the center of gravity (CoG), because the hoist operator usually stands or sits outboard, close to the rope or cable.

In addition, the hoist may be installed rigidly at the rotary wing aircraft and does not contribute to the change of center of gravity (CoG) when the articulated support structure is being moved.

As a result, the load carrying assembly provides additional operational safety due to an elimination of a potential contact between cable or rope and external load with the rotary wing aircraft, due to an increased distance between rotor disc and ground obstacles, and due to a lateral displacement of the rotary wing aircraft relative to the operational site, which is beneficial when hoisting to or from elevated platforms.

Furthermore, the load carrying assembly reduces the direct operating costs by eliminating the requirement for a dedicated hoist operator, as the hoist itself can be operated by a pilot of the rotary wing aircraft. At the same time, the useful payload of the rotary wing aircraft can be increased.

Moreover, the load carrying assembly may increase the aerodynamic efficiency of the rotary wing aircraft, e.g. by stowing the load carrying assembly in an appropriate manner during flight. If desired, the articulated boom may be automatically extended during deployment and automatically retracted in case of a rope or cable cut.

The load carrying assembly may reduce or eliminate rope or cable pendulum by using active and/or passive damping elements. The load carrying assembly may be equipped with personnel securing devices, cameras, lights, and other features which might be helpful during the operation of the load carrying assembly, if desired.

According to one aspect, the load engaging system engages with the sheave arrangement during the stowing rotation of the articulated cargo boom.

According to one aspect, the sheave arrangement blocks passage of the load engaging system such that the cargo cable pulls at the sheave arrangement and the second boom end with the load engaging system.

According to one aspect, the articulated cargo boom further comprises an extension and retraction device that is at least adapted to extend the articulated cargo boom such that the distance between the first boom end and the second boom end is increased or to retract the articulated cargo boom such that the distance between the first boom end and the boom second boom end is decreased.

According to one aspect, the extension and retraction device comprises a hydraulic component.

According to one aspect, the extension and retraction device further comprises automatic extension means for automatically increasing the distance between the first boom end and the second boom end during the winding or unwinding of the cargo cable.

According to one aspect, the load carrying assembly further comprises a cargo boom stopper that stops the deploying rotation of the articulated cargo boom during the unwinding of the cargo cable when the articulated cargo boom has reached the deployed position.

According to one aspect, the drive further comprises automatic retrieval means for automatically moving the articulated cargo boom from the deployed position to the stowed position when the cargo cable is torn or cut.

According to one aspect, the load carrying assembly further comprises an actuating or damping device that is at least adapted to perform a horizontal rotation of the articulated cargo boom around an axis defined by the swivel.

According to one aspect, the load carrying assembly further comprises an actuating or damping device that is at least adapted to dampen or counteract any undesired movement of the cargo cable.

According to one aspect, the sheave arrangement further comprises at least one roller that is adapted to guide the cargo cable during the unwinding and the rewinding of the cargo cable.

According to one aspect, the sheave arrangement further comprises a load engaging system stopper that prevents the load engaging system from passing the at least one roller during the rewinding of the cargo cable.

Moreover, a rotary wing aircraft may include a load carrying assembly as described above, wherein the first attachment point is in a lower region of the rotary wing aircraft, and wherein the lower region is below a lower horizontal line that is based on a lower door rim of a door of the rotary wing aircraft.

According to one aspect, the second attachment point is in an upper region of the rotary wing aircraft, wherein the upper region is above an upper horizontal line that is based on an upper door rim of the door of the rotary wing aircraft.

According to one aspect, the articulated cargo boom extends at least from the lower region of the rotary wing aircraft to the upper region of the rotary wing aircraft when the articulated cargo boom is in the stowed position.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative rotary wing aircraft with a load carrying assembly in accordance with some embodiments,
- Figure 2 is a diagram of an illustrative rotary wing aircraft with a load carrying assembly that is shown in different positions between a stowed position and a deployed position in accordance with some embodiments,
- Figure 3 is a diagram of an illustrative rotary wing aircraft with a load carrying assembly that has an actuating or damping device in accordance with some embodiments,
- Figure 4 is a diagram of an illustrative sheave arrangement that is attached to an articulated cargo boom in accordance with some embodiments,
- Figure 5 is a diagram of an illustrative swivel that attaches an articulated cargo boom rotatively to a drive in accordance with some embodiments, and
- Figure 6 is a diagram of an illustrative articulated cargo boom with an extension and retraction device in accordance with some embodiments.

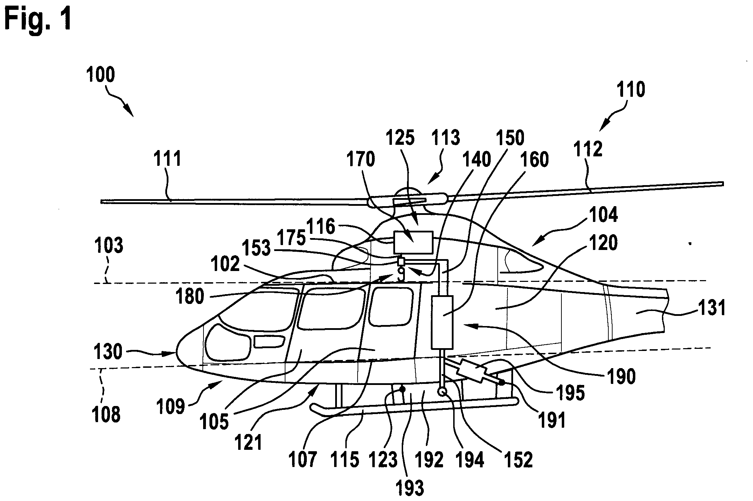

Exemplary embodiments may be included in any rotary wing aircraft that is adapted for vertical take-off and landing. Figure 1 shows an example of a rotary wing aircraft 100. The rotary wing aircraft may be a multicopter, a drone, or any other rotorcraft such as tiltable-wing, fixed-wing, or wingless aircraft. Aircraft 100 is exemplarily illustrated as a helicopter. Thus, for purposes of simplicity and clarity, aircraft 100 is hereinafter referred to as "helicopter" 100.

Helicopter 100 is exemplarily embodied with fuselage 120 and at least one multi-blade main rotor 110 for providing lift and forward or backward thrust during operation.

At least one multi-blade main rotor 110 illustratively comprises a plurality of rotor blades 111, 112. Rotor blades 111, 112 are mounted at an associated rotor head 113 to a rotor shaft, which rotates in operation of helicopter 100 around the rotor shaft.

Fuselage 120 comprises fuselage underside 121 that is illustratively connected to landing gear 115. Landing gear 115 is exemplarily embodied as a skid-type landing gear. However, landing gear 115 may be any type of landing gear. For example, landing gear 115 may be a wheel-type landing gear, if desired.

Fuselage 120 may define nose region 130 that is arranged in front of fuselage 120. Fuselage 120 also defines tail boom 131, which is cut away and not shown in greater detail, for simplicity and clarity of the drawings.

If desired, helicopter 100 may include a load carrying assembly 190 for carrying a load. The load carrying assembly 190 may include load engaging system 180, drive 192, hoist 170, articulated cargo boom 150, swivel 194, sheave arrangement 140, and cargo cable 175.

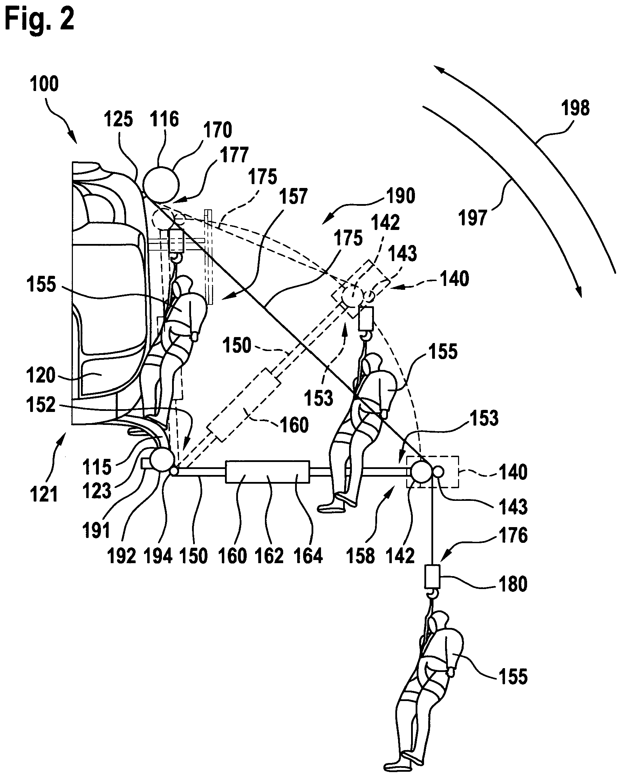

Illustratively, cargo cable 175 may have a first end (e.g., cable end 177 of Figure 2) that is attachable to hoist 170 and a second end (e.g., cable end 176 of Figure 2) that is attached to load engaging system 180. Cargo cable 175 may include a chain, a rope, or a cable as its lifting medium. Cargo cable 175 may be made from metal, natural fiber, and/or plastics.

Load engaging system 180 may be adapted for receiving a load. Illustratively, load engaging system 180 may include an eye, a hook, a snap hook, a spring safety hook, a swivel hook, a ring, or any other system that may be adapted for receiving or engaging a load.

The articulated cargo boom 150 may be movable between a stowed position 157 and a deployed position 158 as illustratively shown in Figure 2. The articulated cargo boom 150 may have first and second boom ends 152, 153.

As shown in Figure 1, the articulated cargo boom 150 may include an extension and retraction device 160. Extension and retraction device 160 may at least be adapted to extend the articulated cargo boom 150 such that the distance between the first boom end 152 and the second boom end 153 is increased or to retract the articulated cargo boom 150 such that the distance between the first boom end 152 and the boom second boom end 153 is decreased.

Swivel 194 may attach the first boom end 152 rotatively to the drive 192. Sheave arrangement 140 may be attached to the second boom end 153.

Helicopter 100 may have first and second attachment points 123, 125. The first attachment point 123 may be in a lower region 109 of the helicopter 100, if desired. Illustratively, the lower region 109 may be defined to be below a lower horizontal line 108 that is based on a lower door rim 107 of a door 105 of the helicopter 100. For example, the first attachment point 123 may be below door 105 of helicopter 100.

The second attachment point 125 may be in an upper region 104 of the helicopter 100, if desired. Illustratively, the upper region 104 may be defined to be above an upper horizontal line 103 that is based on an upper door rim 102 of door 105. For example, the second attachment point 125 may be above door 105 of helicopter 100.

If desired, the articulated cargo boom 150 may extend at least from the lower region 109 of the helicopter 100 to the upper region 104 of the helicopter 100 when the articulated cargo boom 150 is in the stowed position.

By way of example, drive 192 may be adapted to be removably attached to the first attachment point 123. Thus, drive 192, and thereby swivel 194, sheave arrangement 140, and articulated cargo boom 150, may be detached from the first attachment point 123 whenever the load carrying assembly 190 is not required for a particular mission.

Drive 192 may include an electric motor. If desired, drive 192 may include a clutch and a gearbox. Illustratively, drive 192 may include automatic retrieval means 193 for automatically moving the articulated cargo boom 150 from the deployed position to the stowed position when the cargo cable 175 is torn or cut.

Illustratively, hoist 170 may be adapted to be removably attached to the second attachment point 125. Thus, hoist 170, and thereby cargo cable 175 and load engaging system 180, may be detached from the second attachment point 125 whenever the load carrying assembly 190 is not required for a particular mission.

Hoist 170 may include a drum or a lift-wheel around which the cargo cable 175 wraps. Hoist 170 may be manually operated. If desired, hoist 170 may be operated via a control device. Hoist 170 may be electrically or hydraulically or pneumatically driven. For example, hoist 170 may include motor 116.

If desired, hoist 170 may deploy and retrieve cargo cable 175, thereby determining the deployed length of cargo cable 175. Illustratively, hoist 170 may include a quick release system such that the cargo cable 175 can be released at any time (e.g., when the deployed cargo cable represents a danger for the rotary wing aircraft). Actuating such a quick release system to release cargo cable 175 is sometimes also referred to as cutting the cable, and a released cargo cable 175 is sometimes also referred to as a cut cable.

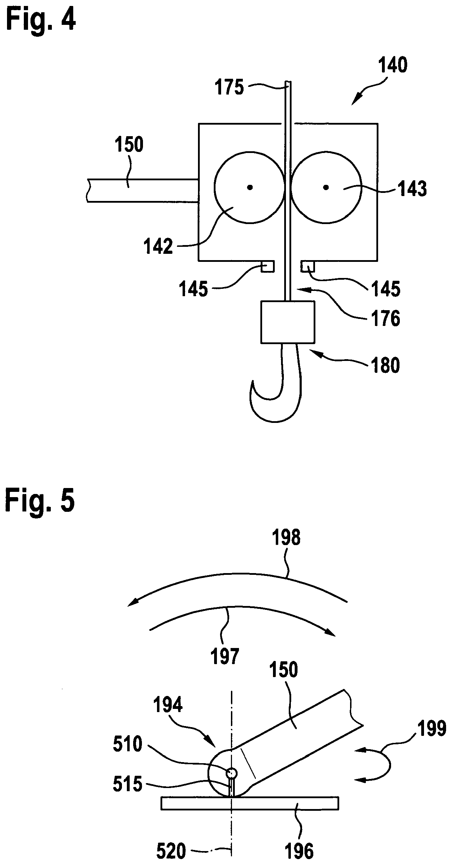

By way of example, the load carrying system 190 may include an actuating or damping device 195 that is at least adapted to perform a horizontal rotation (e.g., horizontal rotation 199 of Figure 5) of the articulated cargo boom 150 around an axis defined by the swivel 194. If desired, the actuating or damping device 195 may at least be adapted to dampen or counteract any undesired movement of the cargo cable 175.

Actuating or damping device 195 may be attached between the articulated cargo boom 150 and attachment 191. Attachment 191 may be provided at the landing gear 115 or any appropriate point of fuselage 120. For example, attachment 191 may be in the lower region 109 of helicopter 100. According to one aspect, actuating or damping device 195 may vary the length of the deployed cargo cable 175, thereby varying the effective moment arm of the cargo cable 175.

Figure 2 is a diagram of an illustrative rotary wing aircraft 100 with a load carrying assembly 190 that is shown in different positions between a stowed position 157 and a deployed position 158 in accordance with some embodiments.

In the stowed position 157, the articulated cargo boom 150 extends at least from the lower region (e.g., lower region 109 of Figure 1) of the rotary wing aircraft 100 to the upper region (e.g., upper region 104 of Figure 1) of the rotary wing aircraft 100. Illustratively, the first boom end 152 that the swivel 194 rotatively attaches to the drive 192 may be in the lower region of the rotary wing aircraft, while the second boom end 153, to which the sheave arrangement 140 is attached, is in the upper region. As an example, the articulated cargo boom 150 may be vertically stowed next to the fuselage. If desired, the articulated cargo boom 150 may be stowed next to a door 105 of the rotary wing aircraft 100.

In the deployed position 158, the articulated cargo boom 150 may extend horizontally from the lower region of the rotary wing aircraft 100. For example, the articulated cargo boom 150 may extend horizontally from the swivel 194 that attaches one boom end 152 of articulated cargo boom 150 rotatively to drive 192, while drive 192 may be removably attached to attachment point 125 of rotary wing aircraft 100, and attachment point 125 may be in the lower region 109 of the rotary wing aircraft 100. In the deployed position, the articulated cargo boom 150 may completely be below a door 105 of the rotary wing aircraft 100, if desired.

Sheave arrangement 140 may include at least one roller 142 that is adapted to guide the cargo cable 175 during the unwinding and the rewinding of the cargo cable 175. As shown in Figure 2, sheave arrangement 140 may include two rollers 142, 143. If desired, sheave arrangement 140 may include more than two rollers.

Illustratively, sheave arrangement 140 may include a load engaging system stopper (e.g., load engaging stopper 145 of Figure 4) that prevents the load engaging system 180 from passing the at least one roller 142.

As shown in Figure 2, in the stowed position 157, hoist 170 has retrieved cargo cable 175, which pulls via the load engaging system 180 and the sheave arrangement 140 on the articulated cargo boom 150, thereby maintaining the articulated cargo boom 150 in the stowed position 157.

Illustratively, an unwinding of the cargo cable 175 from the hoist 170 initiates a deploying rotation 197 of the articulated cargo boom 150 around the swivel 194 from the stowed position 157 to the deployed position 158.

If desired, drive 192 may be configured to automatically deploy articulated cargo boom 150 via swivel 194 when cargo cable 175 unwinds from hoist 170. For example, drive 192 causes the articulated cargo boom 150 to start a deploying rotation 197 as soon as the cargo cable 175 together with the sheave arrangement 140 no longer maintains the articulated cargo boom 150 in the stowed position.

During the unwinding of cargo cable 175, the load engaging system 180 may stay in contact with the sheave arrangement 140 from the stowed position 157 to the deployed position 158. The load engaging system 180 and the load 155 may disengage from the sheave arrangement 140 and are lowered from the sheave arrangement 140 when the articulated cargo boom 150 has reached the deployed position 158 and the cargo cable 175 is further rewound from the hoist 170.

As shown in Figure 2, the load engaging system 180 with the load 155 stays in an upright (i.e., vertical) position. If desired, the load engaging system 180 may include a device that maintains the load engaging system 180 in an upright (i.e., vertical) position throughout the deploying rotation 197 and the stowing rotation 198.

Illustratively, the articulated cargo boom 150 may include an extension and retraction device 160. The extension and retraction device 160 may be at least adapted to extend the articulated cargo boom 150 such that the distance between the first boom end 152 and the second boom end 153 is increased. If desired, the extension and retraction device 160 may be adapted to retract the articulated cargo boom 150 such that the distance between the first boom end 152 and the boom second boom end 153 is decreased.

Illustratively, the extension and retraction device 160 may include a hydraulic component 162 that performs the extension and/or retraction operation.

If desired, the extension and retraction device 160 may include automatic extension means 164. The automatic extension means 164 may automatically increase the distance between the first boom end 152 and the second boom end 153 of the articulated cargo boom 150 during the winding or unwinding of the cargo cable 175, thereby ensuring a predetermined distance between the cargo cable 175 and the fuselage of the rotary wing aircraft 100 and reducing the probability of a potential contact between the cargo cable 175 and the fuselage.

As an example, the automatic extension means 164 may automatically start to increase the distance between the first and second boom ends 152, 153 when the articulated cargo boom 150 has performed half of the deploying rotation 197 from stowed position 157 to deployed position 158. As another example, the automatic extension means 164 may automatically start to increase the distance between the first and second boom ends 152, 153 when the articulated cargo boom 150 has reached the deployed position 158.

A rewinding of the cargo cable 175 may vertically move the load engaging system 180 and the load 155 that is attached to the load engaging system 180 until the load engaging system 180 reaches the sheave arrangement 140.

When the load engaging system 180 reaches the sheave arrangement 140, the load engaging system 180 engages with the sheave arrangement 140 to perform the stowing rotation 198 of the articulated cargo boom 150.

For example, the sheave arrangement 140 may block passage of the load engaging system 180 when the load engaging system 180 reaches the sheave arrangement 140. Further rewinding the cargo cable 175 may cause the load engaging system 180 to pull at the sheave arrangement 140, and thus at the boom end 153 of articulated cargo boom 150. Thereby, a force in direction of deploying rotation 197 of drive 192 may be overpowered by the hoist 170.

Illustratively, a further rewinding of the cargo cable 175 from the deployed position may initiate a stowing rotation 198 of the articulated cargo boom 150 around the swivel 194 from the deployed position 158 to the stowed position 157.

By way of example, load carrying assembly 190 may include a stopping function that stops the stowing rotation 198 of the articulated cargo boom 150 when it reaches the stowed position 157.

Thus, the deploying rotation 197 and the stowing rotation 198 of the articulated cargo boom 150 may be controlled by controlling the hoist 170.

If desired, the automatic extension means 164 may automatically decrease the distance between the first boom end 152 and the second boom end 153 of the articulated cargo boom 150 during the rewinding of the cargo cable 175.

As an example, the automatic extension means 164 may automatically decrease the distance between the first boom end 152 and the second boom end 153 when the load engaging system 180 reaches the sheave arrangement 140 during the rewinding of the cargo cable 175 and/or as soon as the articulated cargo boom 150 starts moving from the deployed position 158 to the stowed position 157. As another example, the automatic extension means 164 may automatically decrease the distance between the first boom end 152 and the second boom end 153 when the load engaging system 180 reaches half way between the deployed position 158 to the stowed position 157.

If desired, the rewinding of the cargo cable 175 may be paused while the automatic extension means 164 automatically decreases the distance between the first boom end 152 and the second boom end 153. For example, the rewinding of the cargo cable 175 may be paused in the deployed position 158 for as long as the automatic extension means 164 automatically decreases the distance between the first boom end 152 and the second boom end 153.

Throughout the unwinding and the rewinding of the cargo cable 175, a device may maintain the load engaging system 180 always in an upright (i.e., vertical) orientation, if desired.

Consider the scenario in which the cargo cable 175 is cut, torn, released from the hoist, or some other scenario in which the load engaging system 180 is no longer attached to the hoist 170 via the cargo cable 175. In this scenario, the articulated cargo boom 150 may no longer be retrieved by rewinding the cargo cable 175.

Illustratively, in this scenario, automatic retrieval means 193 may automatically move the articulated cargo boom 150 from the deployed position 158 to the stowed position 157. For example, the drive 192 may be configured to reel-in the articulated cargo boom 150 upon detecting that the load engaging system 180 is no longer attached to the hoist 170 via the cargo cable 175.

If desired, the hoist 170 may be attached to the second end 153 of the articulated cargo boom 150. For example, the hoist 170 may be integrated into the sheave arrangement 140. In this example, the drive 192 may deploy and retrieve the articulated cargo boom 150 by moving the articulated cargo boom 150 between the stowed position 157 and the deployed position 158.

Illustratively, the load carrying assembly 190 may actively or passively counteract and/or dampen any pendulum or oscillating movement of cargo cable 175. As an example, load carrying assembly 190 may move the articulated cargo boom 150 between the stowed position 157 and the deployed position 158, thereby varying the effective moment arm of the cargo cable 175. As another example, the load carrying assembly 190 may vary the length of the articulated cargo boom 150 via the extension and retraction device 160, thereby varying the effective moment arm of the cargo cable 175.

As yet another example, the load carrying assembly 190 may include an actuating or damping device 195 that is at least adapted to perform a horizontal rotation 199 of the articulated cargo boom 150 around an axis (e.g., axis 520 of Figure 5) defined by the swivel 194. Thereby, the actuating or damping device 195 may counteract any movement of cargo cable 175 in horizontal direction.

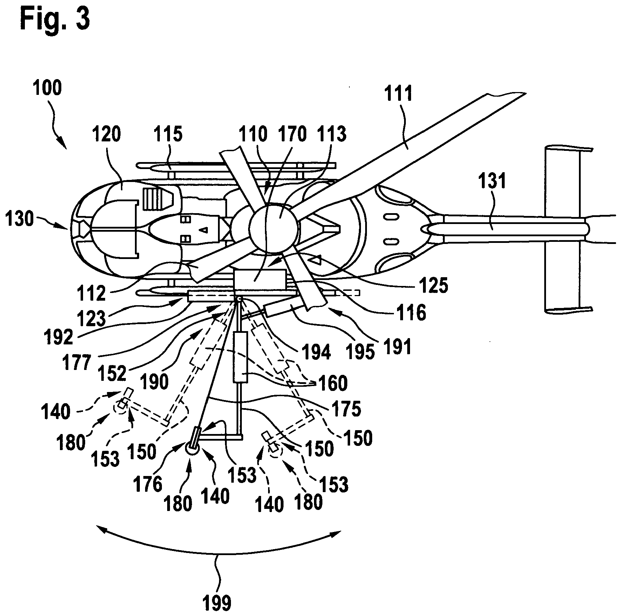

Figure 3 is a diagram of an illustrative rotary wing aircraft 100 with a load carrying assembly 190 that has an actuating or damping device 195. As shown in Figure 3, the actuating or damping device 195 may be attached between an attachment point 191 and articulated cargo boom 150.

Attachment point 191 may be in the lower portion (e.g., lower portion 109 of Figure 1) of rotary wing aircraft 100. If desired, attachment point 191 may be at essentially the same level as the attachment point 123 at which the drive 192 is adapted to be removably attached to.

Actuating or damping device 195 may include a suspension and/or shock absorber to passively dampen any movement of articulated cargo boom 150 caused by a movement of cargo cable 175 and/or the load that is attached to the load engaging system 180.

Illustratively, actuating or damping device 195 may include sensors that capture any movement of cargo cable 175 in a horizontal direction. The controlling device may monitor the sensors and control an actuating device (e.g., a hydraulic or pneumatic device) that moves the articulated cargo boom 150 to actively counteract any movement of cargo cable 175 in a horizontal direction.

By way of example, actuating or damping device 195 may act on the articulated cargo boom 150 in the stowed position such that the articulated cargo boom 150 takes an aerodynamic beneficial position.

Figure 4 is a diagram of an illustrative sheave arrangement 140 that is attached to an articulated cargo boom 150 in accordance with some embodiments. Illustratively, sheave arrangement 140 may include at least one roller 142 that is adapted to guide the cargo cable 175 during the unwinding and the rewinding of the cargo cable 175.

As shown in Figure 4, sheave arrangement 140 may include two rollers 142, 143. Cargo cable 175 may pass between the two rollers 142, 143. If desired, rollers 142 and 143 may be arranged to ensure that cargo cable 175 is maintained in a guided position between the rollers 142, 143. For example, sheave arrangement 140 may move relative to articulated cargo boom 150 to ensure that the axes of rollers 142, 143 are always perpendicular to an axis that is parallel to the extension of the cargo cable 175 from the hoist 170 to the sheave arrangement 140.

Illustratively, sheave arrangement 140 includes a load engaging system stopper 145. Load engagement system stopper 145 may prevent that the load engaging system 180 slips past the sheave arrangement 140 during a rewinding of cargo cable 175. Thus, a further rewinding of cargo cable 175 may pull via load engaging system 180 and load engaging system stopper 145 on the articulated cargo boom 150, thereby moving the articulated cargo boom 150 from the deployed position to the stowed position.

Figure 5 is a diagram of an illustrative swivel 194 that attaches an articulated cargo boom 150 rotatively to a drive 192. Swivel 194 may include a pivot bearing 510 such that articulated cargo boom 150 may perform a deploying rotation 197 and a stowing rotation 198.

Illustratively, swivel 194 may include an additional pivot bearing 515 such that articulated cargo boom 150 may perform a horizontal rotation 199 around an axis 520. As an example, actuating or damping device 195 of Figure 3 may dampen a horizontal rotation 199 of articulated cargo boom 150 around pivot bearing 515 caused by a pendulum movement of the cargo cable. As another example, actuating or damping device 195 of Figure 3 may actively cause a horizontal rotation 199 of articulated cargo boom 150 around pivot bearing 515 to dampen a pendulum movement of the cargo cable.

If desired, swivel 194 may include a sphere that is able to rotate within a support structure, thereby enabling rotations 197, 198, and 199.

By way of example, the load carrying assembly 190 may include a cargo boom stopper 196 that stops the deploying rotation 197 of the articulated cargo boom 150 during the unwinding of the cargo cable when the articulated cargo boom 150 has reached the deployed position (e.g., deployed position 158 of Figure 2). If desired, the load carrying assembly 190 may include an additional cargo boom stopper that stops the stowing rotation 198 of the articulated cargo boom 150 during the rewinding of the cargo cable when the articulated cargo boom 150 has reached the stowed position (e.g., stowed position 157 of Figure 2).

If desired, the load carrying assembly 190 may include cargo boom stoppers that limit the horizontal rotation 199 of the articulated cargo boom 150.

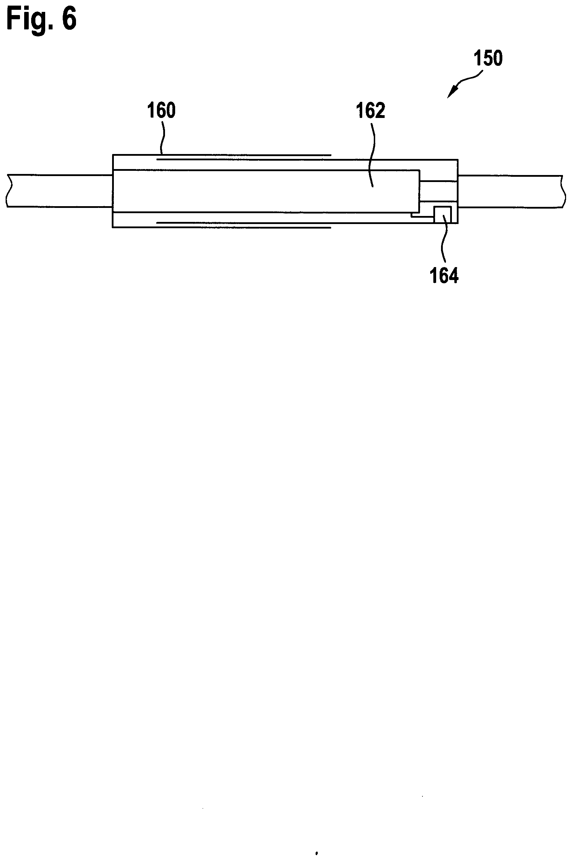

Figure 6 is a diagram of an illustrative articulated cargo boom 150 with an extension and retraction device 160 in accordance with some embodiments. The extension and retraction device 160 may be adapted to increase and decrease the length of the articulated cargo boom 150 by increasing or decreasing the distance between the two ends of the articulated cargo boom 150.

Since the cargo cable passes through the sheave arrangement that is attached to one end of the articulated cargo boom 150 and the other end of the articulated cargo boom 150 is attached via a swivel and a drive to the rotary wing aircraft, the extension and retraction device 160 may increase and decrease the distance at which the cargo cable starts its vertical descent from the rotary wing aircraft.

Illustratively, the extension and retraction device 160 may include a hydraulic component 162. If desired, the extension and retraction device 160 may include a pneumatic component.

By way of example, the extension and retraction device 160 may include automatic extension means 164 for automatically increasing the length of the articulated cargo boom 150 by increasing the distance between the first and second boom ends during the unwinding of the cargo cable when the articulated cargo boom 150 has reached the deployed position.

Illustratively, the automatic extension means 164 may automatically decrease the length of the articulated cargo boom 150 by decreasing the distance between the first and second boom ends during the rewinding of the cargo cable when the articulated cargo boom 150 moves from the deployed position to the stowed position.

If desired, the automatic extension means 164 may automatically decrease the length of the articulated cargo boom 150 during the rewinding of the cargo cable before the articulated cargo boom 150 leaves the deployed position to move towards the stowed position.

Illustratively, the automatic extension means 164 may include a control circuit, a sensor, and/or an actuator that acts on the hydraulic component 162.

It should be noted that the above-described embodiments are merely described for illustration purposes, but not in order to restrict the present invention thereto. Instead, multiple modifications and variations of the presented embodiments are possible and should, therefore, also be considered as being part of the invention.

For example, articulated cargo boom 150 of Figures 1 and 3 is shown to have a 90-degree angle between the extension and retraction device 160. However, articulated cargo boom may have a 90-degree angle between the swivel 194 and the extension and retraction device 160 instead. Alternatively, the articulated cargo boom 150 may have an angle that is smaller than 90 degrees. If desired, the articulated cargo boom 150 may be straight.

As another example, hoist 170 of Figure 2 is shown to be removably attached to an attachment point 125 of the rotary wing aircraft 100. However, hoist 170 may be attached to the second end of the articulated cargo boom 150. In such an embodiment, sheave arrangement 140 may be omitted and drive 192 may perform the deploying and stowing rotations 197, 198.

### Reference List

- 100: rotary wing aircraft
- 102: upper door rim
- 103: upper horizontal line
- 104: upper portion
- 105: door
- 107: lower door rim
- 108: lower horizontal line
- 109: lower portion
- 110: multi-blade main rotor
- 111, 112: rotor blades
- 113: rotor head
- 115: landing gear
- 116: motor
- 120: fuselage
- 121: fuselage underside
- 123, 125: attachment point
- 130: nose region
- 131: tail boom
- 140: sheave arrangement
- 142, 143: sheave, roller
- 145: load engaging system stopper
- 150: articulated cargo boom
- 152, 153: boom end
- 155: load
- 157: stowed position
- 158: deployed position
- 160: extension and retraction device
- 162: hydraulic component
- 164: automatic extension means
- 170: hoist
- 175: cargo cable
- 176, 177: cable end
- 180: load engaging system
- 190: load carrying assembly
- 191: attachment
- 192: drive
- 193: automatic retrieval means
- 194: swivel
- 195: actuating or damping device
- 196: cargo boom stopper
- 197: deploying rotation
- 198: stowing rotation
- 199: horizontal rotation
- 510, 515: pivot bearing
- 520: axis

## Claims

1. A load carrying assembly (190) for carrying a load with a rotary wing aircraft (100), comprising:
a load engaging system (180) that is adapted for receiving a load;
a drive (192) that is adapted to be removably attached to a first attachment point (123) of an associated rotary wing aircraft (100);
a hoist (170) that is adapted to be removably attached to a second attachment point (125) of the associated rotary wing aircraft (100), wherein the second attachment point (125) is different than the first attachment point (123);
an articulated cargo boom (150) with a first boom end (152) and a second boom end (153) that is opposite the first boom end (152), wherein the articulated cargo boom (150) is movable between a stowed position (157) and a deployed position (158);
a swivel (194) that attaches the first boom end (152) of the articulated cargo boom (150) rotatively to the drive (192);
a sheave arrangement (140) that is attached to the second boom end (153) of the articulated cargo boom (150); and
a cargo cable (175) that passes through the sheave arrangement (140) and comprises:
a first cable end (177) that is attachable to the hoist (170), and
a second cable end (176) that is attachable to the load engaging system (180), wherein an unwinding of the cargo cable (175) from the hoist (170) initiates a deploying rotation (197) of the articulated cargo boom (150) around the swivel (194) from the stowed position (157) to the deployed position (158), and wherein a rewinding of the cargo cable (175) initiates a stowing rotation (198) of the articulated cargo boom (150) around the swivel (194) from the deployed position (158) to the stowed position (157).

2. The load carrying assembly (190) of claim 1, wherein the load engaging system (180) engages with the sheave arrangement (140) during the stowing rotation (198) of the articulated cargo boom (150).

3. The load carrying assembly (190) of claim 2, wherein the sheave arrangement (140) blocks passage of the load engaging system (180) such that the cargo cable (175) pulls at the sheave arrangement (140) and the second boom end (153) with the load engaging system (180).

4. The load carrying assembly (190) of any one of the preceding claims, wherein the articulated cargo boom (150) further comprises:
an extension and retraction device (160) that is at least adapted to extend the articulated cargo boom (150) such that the distance between the first boom end (152) and the second boom end (153) is increased or to retract the articulated cargo boom (150) such that the distance between the first boom end (152) and the boom second boom end (153) is decreased.

5. The load carrying assembly (190) of claim 4, wherein the extension and retraction device (160) comprises a hydraulic component (162).

6. The load carrying assembly (190) of claim 4, wherein the extension and retraction device (160) further comprises:
automatic extension means (164) for automatically increasing the distance between the first boom end (152) and the second boom end (153) during the winding or unwinding of the cargo cable (175).

7. The load carrying assembly (190) of any one of the preceding claims, further comprising:
a cargo boom stopper (196) that stops the deploying rotation (197) of the articulated cargo boom (150) during the unwinding of the cargo cable (175) when the articulated cargo boom (150) has reached the deployed position (158).

8. The load carrying assembly (190) of any one of the preceding claims, wherein the drive (192) further comprises:
automatic retrieval means (193) for automatically moving the articulated cargo boom (150) from the deployed position (158) to the stowed position (157) when the cargo cable (175) is torn or cut.

9. The load carrying assembly (190) of any one of the preceding claims, further comprising:
an actuating or damping device (195) that is at least adapted to perform a horizontal rotation (199) of the articulated cargo boom (150) around an axis (520) defined by the swivel (194).

10. The load carrying assembly (190) of any one of claims 1 to 8, further comprising:
an actuating or damping device (195) that is at least adapted to dampen or counteract any undesired movement of the cargo cable (175).

11. The load carrying assembly (190) of any one of the preceding claims, wherein the sheave arrangement (140) further comprises:
at least one roller (142) that is adapted to guide the cargo cable (175) during the unwinding and the rewinding of the cargo cable (175).

12. The load carrying assembly (190) of claim 11, wherein the sheave arrangement (140) further comprises:
a load engaging system stopper (145) that prevents the load engaging system (180) from passing the at least one roller (142) during the rewinding of the cargo cable (175).

13. A rotary wing aircraft (100) with a load carrying assembly (190) according to any one of the preceding claims, wherein the first attachment point (123) is in a lower region (109) of the rotary wing aircraft (100), and wherein the lower region (109) is below a lower horizontal line (108) that is based on a lower door rim (107) of a door (105) of the rotary wing aircraft (100).

14. The rotary aircraft (100) of claim 13, wherein the second attachment point (125) is in an upper region (104) of the rotary wing aircraft (100), and wherein the upper region (104) is above an upper horizontal line (103) that is based on an upper door rim (102) of the door (105) of the rotary wing aircraft (100).

15. The rotary aircraft (100) of claim 14, wherein the articulated cargo boom (150) extends at least from the lower region (109) of the rotary wing aircraft (100) to the upper region (104) of the rotary wing aircraft (100) when the articulated cargo boom (150) is in the stowed position (157).

## Patentansprüche

1. Lastentragende Baugruppe (190) zum Tragen einer Last mit einem Drehflügelflugzeug (100), die umfasst:
ein Lastaufnahmesystem (180), das eingerichtet ist, um eine Last aufzunehmen;
einen Antrieb (192), der eingerichtet ist, um an einem ersten Befestigungspunkt (123) eines zugehörigen Drehflügelflugzeugs (100) lösbar befestigt zu werden;
eine Winde (170), die eingerichtet ist, um an einem zweiten Befestigungspunkt (125) des zugehörigen Drehflügelflugzeugs (100) lösbar befestigt zu werden, wobei der zweite Befestigungspunkt (125) ein anderer ist als der erste Befestigungspunkt (123);
einen gelenkigen Lastausleger (150) mit einem ersten Auslegerende (152) und einem zweiten Auslegerende (153), das dem ersten Auslegerende (152) gegenüberliegt, wobei der gelenkige Lastausleger (150) zwischen einer verstauten Position (157) und einer ausgefahrenen Position (158) beweglich ist;
ein Drehgelenk (194), das das erste Auslegerende (152) des gelenkigen Lastauslegers (150) drehbar mit dem Antrieb (192) verbindet;
eine Rollenanordnung (140), die am zweiten Auslegerende (153) des gelenkigen Lastauslegers (150) angebracht ist; und
ein Lastseil (175), das durch die Rollenanordnung (140) verläuft und umfasst:
ein erstes Seilende (177), das an der Winde (170) befestigbar ist, und
ein zweites Seilende (176), das an dem Lastaufnahmesystem (180) befestigbar ist, wobei ein Abwickeln des Lastseils (175) von der Seilwinde (170) eine Ausfahrdrehung (197) des gelenkigen Lastauslegers (150) um das Drehgelenk (194) von der verstauten Position (157) in die ausgefahrene Position (158) einleitet, und wobei ein Aufwickeln des Lastseils (175) eine Verstaudrehung (198) des gelenkigen Lastauslegers (150) um das Drehgelenk (194) aus der ausgefahrenen Position (158) in die verstaute Position (157) einleitet.

2. Lastentragende Baugruppe (190) nach Anspruch 1, bei der das Lastaufnahmesystem (180) während der Verstaudrehung (198) des gelenkigen Lastauslegers (150) in die Rollenanordnung (140) eingreift.

3. Lastentragende Baugruppe (190) nach Anspruch 2, bei der die Rollenanordnung (140) den Durchgang des Lastaufnahmesystems (180) blockiert, so dass das Lastseil (175) mit dem Lastaufnahmesystem (180) an der Rollenanordnung (140) und dem zweiten Auslegerende (153) zieht.

4. Lastentragende Baugruppe (190) nach einem der vorhergehenden Ansprüche, bei der der gelenkige Lastausleger (150) ferner umfasst:
eine Ausstreck- und Einziehvorrichtung (160), die zumindest eingerichtet ist, um den gelenkigen Lastausleger (150) so auszustrecken, dass der Abstand zwischen dem ersten Auslegerende (152) und dem zweiten Auslegerende (153) vergrößert wird, oder um den gelenkigen Lastausleger (150) so einzuziehen, dass der Abstand zwischen dem ersten Auslegerende (152) und dem zweiten Auslegerende (153) verringert wird.

5. Lastentragende Baugruppe (190) nach Anspruch 4, bei der die Ausstreck- und Einziehvorrichtung (160) eine hydraulische Komponente (162) umfasst.

6. Lastentragende Baugruppe (190) nach Anspruch 4, bei der die Ausstreck- und Einziehvorrichtung (160) ferner umfasst:
eine automatische Ausstreckvorrichtung (164) zum automatischen Vergrößern des Abstands zwischen dem ersten Auslegerende (152) und dem zweiten Auslegerende (153) während des Auf- oder Abwickelns des Lastseils (175).

7. Lastentragende Baugruppe (190) nach einem der vorhergehenden Ansprüche, die ferner umfasst:
einen Lastauslegerstopper (196), der die Ausfahrdrehung (197) des gelenkigen Lastauslegers (150) während des Abwickelns des Lastkabels (175) stoppt, wenn der gelenkige Lastausleger (150) die ausgefahrene Position (158) erreicht hat.

8. Lastentragende Baugruppe (190) nach einem der vorhergehenden Ansprüche, bei der der Antrieb (192) ferner umfasst:
eine automatische Rückholvorrichtung (193) zum automatischen Bewegen des gelenkigen Lastauslegers (150) von der ausgefahrenen Position (158) in die verstaute Position (157), wenn das Lastseil (175) gerissen oder zerschnitten ist.

9. Lastentragende Baugruppe (190) nach einem der vorhergehenden Ansprüche, die ferner umfasst:
eine Betätigungs- oder Dämpfungsvorrichtung (195), die zumindest eingerichtet ist, um eine horizontale Drehung (199) des gelenkigen Lastauslegers (150) um eine durch das Drehgelenk (194) definierte Achse (520) auszuführen.

10. Lastentragende Baugruppe (190) nach einem der Ansprüche 1 bis 8, die ferner umfasst: ²
eine Betätigungs- oder Dämpfungsvorrichtung (195), die zumindest geeignet ist, eine unerwünschte Bewegung des Lastseils (175) zu dämpfen oder ihr entgegenzuwirken.

11. Lastentragende Baugruppe (190) nach einem der vorhergehenden Ansprüche, bei der die Rollenanordnung (140) ferner umfasst:
mindestens eine Rolle (142), die geeignet ist, das Tragseil (175) während des Ab- und Aufwickelns des Tragseils (175) zu führen.

12. Lastentragende Baugruppe (190) nach Anspruch 11, bei der die Rollenanordnung (140) ferner umfasst:
einen Stopper (145) für das Lastaufnahmesystem, der verhindert, dass das Lastaufnahmesystem (180) während des Aufwickelns des Lastseils (175) die mindestens eine Rolle (142) passiert.

13. Drehflügelflugzeug (100) mit einer lastentragenden Baugruppe (190) nach einem der vorhergehenden Ansprüche,
bei dem der erste Befestigungspunkt (123) in einem unteren Bereich (109) des Drehflügelflugzeugs (100) liegt, und bei dem der untere Bereich (109) unterhalb einer unteren horizontalen Linie (108) liegt, die auf einer Türunterkante (107) einer Tür (105) des Drehflügelflugzeugs (100) basiert.

14. Drehflügelflugzeug (100) nach Anspruch 13, bei dem der zweite Befestigungspunkt (125) in einem oberen Bereich (104) des Drehflügelflugzeugs (100) liegt, und bei dem der obere Bereich (104) oberhalb einer oberen horizontalen Linie (103) liegt, die auf einer Türoberkante (102) der Tür (105) des Drehflügelflugzeugs (100) basiert.

15. Drehflügelflugzeug (100) nach Anspruch 14, bei dem sich der gelenkige Lastausleger (150) zumindest von dem unteren Bereich (109) des Drehflügelflugzeugs (100) zu dem oberen Bereich (104) des Drehflügelflugzeugs (100) erstreckt, wenn der gelenkige Lastausleger (150) in der verstauten Position (157) ist.

## Revendications

1. Ensemble de transport de charge (190) pour transporter une charge au moyen d'un aéronef à voilure tournante (100), comprenant :
un système d'accrochage de charge (180) qui est apte à recevoir une charge ;
un dispositif d'entrainement (192) qui est apte à être fixé de façon amovible sur un premier point de fixation (123) d'un aéronef à voilure tournante (100) associé ;
un treuil (170) qui est apte à être fixé de façon amovible sur un second point de fixation (125) de l'aéronef à voilure tournante (100) associé, dans lequel le second point de fixation (125) est différent du premier point de fixation (123) ;
un bras de charge articulé (150) avec une première extrémité de bras (152) et une seconde extrémité de bras (153) située à l'opposé de la première extrémité de bras (152), dans lequel le bras de charge articulé (150) est déplaçable entre une position de repos (157) et une position déployée (158) ;
une articulation (194) qui lie à pivotement la première extrémité de bras (152) du bras de charge articulé (150) au dispositif d'entrainement (192) ;
un agencement à poulie (140) qui est fixé sur la seconde extrémité de bras (153) de bras de charge articulé (150) ; et
un câble de transport de charge (175) qui passe au travers de l'agencement à poulie (140) et comprend :
une première extrémité de câble (177) pouvant être fixée au treuil (170), et
une seconde extrémité de câble (176) pouvant être fixée au système d'accrochage de charge (180), dans lequel un déroulement du câble de transport de charge (175) depuis le treuil (170) amorce une rotation de déploiement (197) du bras de charge articulé (150) autour de l'articulation (194) depuis la position de repos (157) jusqu'à la position déployée (158), et dans lequel un enroulement du câble de transport de charge (175) amorce une rotation de mise en position de repos (198) du bras de charge articulé (150) autour de l'articulation (194) depuis la position déployée (158) jusqu'à la position de repos (157).

2. Ensemble de transport de charge (190) selon la revendication 1, dans lequel le système d'accrochage de charge (180) vient en prise avec l'agencement à poulie (140) lors de la rotation de mise en position de repos (198) du bras de charge articulé (150).

3. Ensemble de transport de charge (190) selon la revendication 2, dans lequel l'agencement à poulie (140) bloque le passage du système d'accrochage de charge (180) de façon que le câble de transport de charge (175) exerce une traction sur l'agencement à poulie (140) et la seconde extrémité de bras (153) avec le système d'accrochage de charge (180).

4. Ensemble de transport de charge (190) selon l'une quelconque des revendications précédentes, dans lequel le bras de charge articulé (150) comprend en outre :
un dispositif d'extraction et de rétractation (160) qui est au moins apte à étendre le bras de charge articulé (150) de façon que la distance entre la première extrémité de bras (152) et la seconde extrémité de bras (153) croit, ou à rentrer le bras de charge articulé (150) de façon que la distance entre la première extrémité de bras (152) et la seconde extrémité de bras (153) diminue.

5. Ensemble de transport de charge (190) selon la revendication 4, dans lequel le dispositif d'extraction et de rétractation (160) comprend un composant hydraulique (162).

6. Ensemble de transport de charge (190) selon la revendication 4, dans lequel le dispositif d'extraction et de rétractation (160) comprend en outre :
des moyens d'extraction automatique (164) afin d'accroitre automatiquement la distance entre la première extrémité de bras (152) et la seconde extrémité de bras (153) lors de l'enroulement ou du déroulement du câble de transport de charge (175).

7. Ensemble de transport de charge (190) selon l'une quelconque des revendications précédentes, comprenant en outre :
un butoir (196) de bras de charge qui arrête la rotation de déploiement (197) du bras de charge articulé (150) lors du déroulement du câble de transport de charge (175) lorsque le bras de charge articulé (150) a atteint la position déployée (158).

8. Ensemble de transport de charge (190) selon l'une quelconque des revendications précédentes, dans lequel le dispositif d'entrainement (192) comprend en outre :
des moyens de rattrapage automatique (193) afin de déplacer automatiquement le bras de charge articulé (150) depuis la position déployée (158) jusqu'à la position de repos (157) lorsque le câble de transport de charge (175) est rompu ou coupé.

9. Ensemble de transport de charge (190) selon l'une quelconque des revendications précédentes, comprenant en outre :
un dispositif d'actionnement ou d'amortissement (195) qui est au moins apte à entrainer une rotation horizontale (199) du bras de charge articulé (150) autour d'un axe (520) défini par l'articulation (194).

10. Ensemble de transport de charge (190) selon l'une quelconque des revendications 1 à 8, comprenant en outre :
un dispositif d'actionnement ou d'amortissement (195) qui est au moins apte à amortir ou à compenser tout déplacement intempestif du câble de transport de charge (175).

11. Ensemble de transport de charge (190) selon l'une quelconque des revendications précédentes, dans lequel l'agencement à poulie (140) comprend en outre :
au moins un galet (142) qui est apte à guider le câble de transport de charge (175) lors du déroulement et de l'enroulement du câble de transport de charge (175).

12. Ensemble de transport de charge (190) selon la revendication 11, dans lequel l'agencement à poulie (140) comprend en outre :
un butoir (145) de système d'accrochage de charge qui empêche le système d'accrochage de charge (180) de passer par ledit au moins un galet (142) lors de l'enroulement du câble de transport de charge (175).

13. Aéronef à voilure tournante (100) avec un ensemble de transport de charge (190) selon l'une quelconque des revendications précédentes, dans lequel le premier point de fixation (123) est situé dans une zone inférieure (109) de l'aéronef à voilure tournante (100), et dans lequel la zone inférieure (109) est située sous une ligne horizontale inférieure (108) sur la base d'un bord inférieur (107) de porte d'une porte (105) de l'aéronef à voilure tournante (100).

14. Aéronef à voilure tournante (100) selon la revendication 13, dans lequel le second point de fixation (125) est situé dans une zone supérieure (104) de l'aéronef à voilure tournante (100), et dans lequel la zone supérieure (104) est située au-dessus d'une ligne horizontale supérieure (103) sur la base d'un bord de porte supérieur (102) de la porte (105) de l'aéronef à voilure tournante (100).

15. Aéronef à voilure tournante (100) selon la revendication 14, dans lequel le bras de charge articulé (150) s'étend au moins depuis la zone inférieure (109) de l'aéronef à voilure tournante (100) jusqu'à la zone supérieure (104) de l'aéronef à voilure tournante (100) lorsque le bras de charge articulé (150) est en position de repos (157).
